# EUROPÄISCHE PATENTANMELDUNG

(11) **EP 3 940 242 A1**
(43) Veröffentlichungstag der Anmeldung: **19.01.2022**
(21) Anmeldenummer: 20210531.8
(22) Anmeldetag: 30.11.2020
(51) Int. Cl.: F04D 25/06, F04D 17/10, F04D 29/58

(54) **STRÖMUNGSMASCHINE MIT IN EINER VERGUSSMASSE EINGEBETTETEN ANSCHLUSSLEITUNGEN**

(30) Priorität: 16.07.2020 EP 20186303; 16.07.2020 EP 20186302
(71) Anmelder: BMTS Technology GmbH & Co. KG, 70376 Stuttgart (DE)
(72) Erfinder: SOUCHON, Nicole, 73249 Wernau (DE); BLASCH, Philipp, 70188 Stuttgart (DE)
(74) Vertreter: Herrmann, Jochen

(57) **Zusammenfassung**

Die Erfindung betrifft einen Strömungsmaschine mit einer Antriebswelle (13), die mit einer elektrischen Maschine (10) gekoppelt ist und die ein Strömungsrad (14) mittelbar oder unmittelbar antreibt, wobei die elektrische Maschine (10) einen Stator (12) mit Statorwicklungen aufweist und der Stator (12) in einem Gehäuse (20) aufgenommen ist, wobei die Statorwicklungen über Anschlussleitungen (12.1) an eine außerhalb des Gehäuses (20) angeordnete Stromversorgung (60) angeschlossen oder anschließbar sind, wobei wenigstens eine der Anschlussleitungen (12.1) durch eine Durchführung (25) des Gehäuses (20) abgedichtet aus dem Gehäuse (20) geführt ist. Eine solche Strömungsmaschine weist erfindungsgemäß dann eine hohe Betriebssicherheit auf, wenn vorgesehen ist, dass der Stator (12) in dem Gehäuse (20) zumindest teilweise in eine Vergussmasse (70) eingebettet ist, und dass die Vergussmasse (70) ein Dichtstück (71) bildet, welches die Anschlussleitung (12.1) gegenüber der Durchführung (25) abdichtet. Zudem kann diese Strömungsmaschine auch mit geringem Teile- und Montageaufwand gefertigt werden.

## Beschreibung

Die Erfindung betrifft eine Strömungsmaschine, insbesondere einen Verdichter oder eine Turbine, mit einer Antriebswelle, die mit einer elektrischen Maschine, insbesondere einem Elektromotor oder einem Generator, gekoppelt ist und die ein Strömungsrad, insbesondere ein Verdichterrad oder ein Turbinenrad, mittelbar oder unmittelbar antreibt, wobei die elektrische Maschine einen Stator mit Statorwicklungen aufweist und der Stator in einem Gehäuse aufgenommen ist, wobei die Statorwicklungen über Anschlussleitungen an eine außerhalb des Gehäuses angeordnete Stromversorgung (60) angeschlossen oder anschließbar sind und wobei wenigstens eine der Anschlussleitungen durch eine Durchführung des Gehäuses aus dem Gehäuse herausgeführt ist.

Ein solcher Verdichter ist aus US 2019/0120125 A1 bekannt. In diesem Dokument ist ein Verdichter beschrieben, der als Turbolader in Kraftfahrzeugen verwendet werden kann. Der Verdichter weist ein Motorgehäuse auf, an das einseitig ein Kompressorgehäuse angeflanscht ist. Auf der gegenüberliegenden Seite ist an das Motorgehäuse ein Inverter-Gehäuse angebaut. Im Motorgehäuse ist ein Elektromotor angeordnet, der einen Rotor und einen Stator aufweist. Der Rotor ist mit Permanentmagneten des Elektromotors bestückt und trägt an einem Ende ein Verdichterrad, welches in dem Verdichter-Gehäuse angeordnet ist. Der Stator ist mit seinen Statorwicklungen ebenfalls im Motorgehäuse angeordnet. Die Statorwicklungen sind an Strom-Führungsschienen kontaktiert, die im Übergangsbereich zwischen dem Motorgehäuse und dem Inverter-Gehäuse angeordnet sind. Mit der Strom-Führungsschiene ist ein Kontaktpin kontaktiert, der abgedichtet durch eine Durchführung des Inverter-Gehäuses hindurchgeführt ist. An seinem der Strom-Führungsschiene gegenüberliegenden Ende ist der Kontaktpin an eine weitere Stromschiene angeschlossen. Diese Stromschiene ist schließlich mit einer Anschlussleiste eines Inverters verschraubt.

Es ist Aufgabe der Erfindung, eine Strömungsmaschine der eingangs erwähnten Art bereitzustellen, die mit geringem Teile- und Montageaufwand eine hohe Betriebssicherheit aufweist.

Diese Aufgabe wird dadurch gelöst, dass in dem Gehäuse eine Vergussmasse eingebracht ist, und dass die Vergussmasse ein Dichtstück bildet, welches eine elektrische Leitung, insbesondere die Anschlussleitung, gegenüber der Durchführung abdichtet. Hierdurch wird zum einen der Stator zuverlässig im Gehäuse fixiert. Zum anderen kann die Vergussmasse als Wärme-Leitelement dienen. Somit kann die während des Betriebs entstehende Verlustleistung in Form von Wärme über die Vergussmasse abgeführt werden. Die Montage kann dabei einfach durchgeführt werden. Entsprechend wird der Stator in das Gehäuse eingelegt und anschließend die Vergussmasse in das Gehäuse eingegossen, sodass der Stator an den gewünschten Stellen in die Vergussmasse eingebettet ist. Abschließend kann die Vergussmasse dann aushärten. Als Vergussmasse kommt eine Kunststoffmasse zum Einsatz, die als Duromer ausgebildet sein kann und ein Gemisch aus Harz und Härter aufweist. Dieses Material kann entsprechend niedrig viskos angemischt werden und fließt auch in unzugängliche Bereiche des Gehäuses, um den Stator einzubetten. Die Vergussmasse ist vorzugsweise elektrisch isolierend, insbesondere nicht leitend, ausgebildet. Vorzugsweise wird die Vergussmasse gebildet von einem Epoxidharz mit hoher thermischer Leitfähigkeit, z.B. einem keramisch gefüllten Epoxidharz.

Erfindungsgemäß kann es zu diesem Zweck insbesondere vorgesehen sein, dass der Stator in dem Gehäuse in einer Vergussmasse zumindest teilweise eingebettet ist.

Erfindungsgemäß ist es weiterhin vorgesehen, dass die Vergussmasse nicht nur den Stator zumindest teilweise aufnimmt, sondern diese auch gleichzeitig das Dichtstück bildet, welches zumindest eine Anschlussleitung einer der Statorwicklungen gegenüber der Durchführung abdichtet. Entsprechend kann das Dichtstück in einem Arbeitsschritt zusammen mit der Fixierung des Stators mit der Vergussmasse gefertigt werden. Hierdurch können aufwändige Zusatzelemente, wie sie beim Stand der Technik notwendig sind, eingespart werden. Auf diese Weise verringert sich der Teile- und Montageaufwand erheblich. Besonders bevorzugt ist das Dichtstück einteilig mit dem Bereich der Vergussmasse ausgebildet, welcher den Stator zumindest teilweise aufnimmt. Auf diese Weise wird eine feste Zuordnung des Stators zu den durch die Durchführungen hindurchgeführten Anschlussleitungen geschaffen. Diese feste Zuordnung erhöht die Betriebssicherheit. Insbesondere wird dadurch eine Einheit erzeugt, die wenig anfällig gegenüber Korrosion und insbesondere auch Vibrationen ist.

Gemäß einer bevorzugten Erfindungsvariante kann es vorgesehen sein, dass die Anschlussleitung, insbesondere jede der Anschlussleitungen pro Phase der elektrischen Maschine, einstückig ausgebildet ist und durch die Durchführung hindurch aus dem Gehäuse herausgeführt ist. Die Anschlussleitung kann einfach mit dem Dichtstück in der Durchführung fixiert werden. Zudem wird die Anzahl der elektrischen Verbindungsstellen reduziert, sodass die gesamte Konstruktion weniger anfällig gegenüber Korrosion und Vibrationen ist. Ebenso ist es denkbar, dass zusätzlich oder alternativ zu den Anschlussleitungen des Stators eine elektrische Leitung eine Sensorleitung zum Abgreifen eines Signals, z.B. eines Temperatursignals der elektrischen Maschine, mittels des Dichtstücks in der Durchführung fixiert wird.

Eine denkbare Erfindungsvariante ist dergestalt, dass die Durchführung sich zwischen einer dem Stator zugewandten Öffnung und einer dem Stator abgewandten Öffnung erstreckt, und dass der sich zwischen den Öffnungen erstreckende Bereich der Durchführung zumindest teilweise, vorzugsweise vollständig, mit dem Dichtstück der Vergussmasse ausgefüllt ist. Mit einer solchen Bauweise lässt sich das Dichtstück einfach fertigen. In einer Erfindungsvariante können beispielsweise alle Anschlussleitungen durch eine einzige Durchführung aus dem Gehäuse heraus in das Elektronikgehäuse geführt werden. In einer alternativen Erfindungsvariante kann jede Anschlussleitung durch eine separate Durchführung aus dem Gehäuse heraus in das Elektronikgehäuse geführt werden. Es ist denkbar, dass die durch eine separate Durchführung aus dem Gehäuse geführten Anschlussleitungen in gleichmäßig über den Umfang des Stators verteilten Abständen aus dem Gehäuse heraus in das Elektronikgehäuse geführt werden. Die Anschlussleitungen können sich in Achsrichtung der Antriebswelle erstrecken. So können die Anschlussleitungen in das in Achsrichtung an dem Gehäuse angeordnete Elektronikgehäuse geführt werden. In einer alternativen Variante können die Anschlussleitungen sich in einer Richtung senkrecht zur Achsrichtung erstrecken und so in das radial außen an dem Gehäuse angeordnete Elektronikgehäuse geführt werden.

Eine erfindungsgemäße Strömungsmaschine kann auch derart ausgeführt sein, dass das Gehäuse einen Kühlkanal aufweist, der den Stator zumindest bereichsweise umgibt und der über eine Zulaufleitung und eine Ablaufleitung an eine Kühlmittelversorgung anschließbar ist, und dass die Vergussmasse, insbesondere das Dichtstück mit dem den Kühlkanal aufnehmenden Bereich des Gehäuses in wärmeleitendem Kontakt steht. Entsprechend kann die Abwärme des Stators bzw. der Anschlussleitung dann über die Vergussmasse in das Gehäuse bzw. den Kühlkanal abgeleitet werden. Die Wärme wird in das im Kühlkanal geführte Kühlmedium eingetragen und kann mit diesem aus dem Gehäuse abtransportiert werden. Dies ermöglicht eine zuverlässige Motorkühlung. Wenn dabei auch die das Dichtstück bildende Vergussmasse mit dem Gehäuse im Kontakt steht, dann kann auch die Anschlussleitung in diesem Bereich gekühlt werden. Auf diese Weise werden die elektrischen Leitungsverluste durch die Kühlung reduziert.

Hierbei ist es vorzugsweise vorgesehen, dass die Vergussmasse, insbesondere das Dichtstück eine Wärmeleitfähigkeit im Bereich zwischen 0,5 W/(m^{∗}K) und 5 W/(m^{∗}K) aufweist.

Besonders bevorzugt kann es gemäß der Erfindung vorgesehen sein, dass im Anschluss an die Zulaufleitung ein Vorlauf des Kühlkanals und vor der Ablaufleitung ein Rücklauf des Kühlkanals im Gehäuse ausgebildet ist, und dass die Durchführung zwischen dem Vorlauf und dem Rücklauf im Gehäuse angeordnet ist, wobei sich vorzugsweise die Anschlussleitungen in Achsrichtung der Antriebswelle erstrecken. Im Bereich zwischen dem Vorlauf und dem Rücklauf kann die Anschlussleitung bzw. können die Anschlussleitungen effektiv gekühlt werden, wobei zudem eine platzsparende Bauweise verwirklicht wird. Eine weitere Bauraumoptimierung kann erreicht werden, wenn sich die Anschlussleitung/-en zwischen dem Vorlauf und dem Rücklauf in Achsrichtung der Antriebswelle erstrecken. Auf diese Weise lassen sich besonders kurze Kabellängen zwischen dem Stator und der Stromversorgung verwirklichen. Dies ermöglicht eine Verringerung der Leitungsverluste und die elektromagnetische Verträglichkeit wird hierdurch optimiert.

Eine erfindungsgemäße Strömungsmaschine kann auch dadurch gekennzeichnet sein, dass die Anschlussleitung oder vorzugsweise alle Anschlussleitungen der einzelnen Statorwicklungen durch die Durchführung hindurch in ein Elektronikgehäuse geführt und in dem Elektronikgehäuse an die Stromversorgung angeschlossen sind, die vorzugsweise einen Inverter aufweist. Auf diese Weise lässt sich die Strömungsmaschine zusammen mit der Stromversorgung als Baueinheit fertigen. Wenn die elektrische Maschine als kommutierter, vorzugsweise als elektronisch kommutierter Gleichstrommotor ausgebildet ist, dann kann der Inverter an eine Gleichstrom-Quelle angeschlossen werden und die für die Versorgung der Statorwicklungen erforderliche Spannung erzeugen.

Alternativ kann es auch vorgesehen sein, dass je eine Anschlussleitung einer Spule oder eines Spulenpaars der elektrischen Maschine durch eine eigene Durchführung hindurch in ein Elektronikgehäuse geführt und in dem Elektronikgehäuse an die Stromversorgung angeschlossen sind.

Es kann auch vorgesehen sein, dass das Elektronikgehäuse eine Seitenwand aufweist, die gegenüberliegend dem Gehäuse eine Öffnung bildet, wobei die Öffnung von einer vorzugsweise abnehmbaren Abdeckung verschlossen ist, und wobei die Seitenwand einen seitlichen Durchbruch zur Aufnahme einer Stromzuleitung aufweist. Die Stromversorgung kann geschützt in dem Elektronikgehäuse untergebracht werden. Zu Montage- und Wartungszwecken ist sie durch die abnehmbare Abdeckung leicht zugänglich. Die Stromzuleitung kann platzsparend über die Seitenwand zugeführt werden und kann dann einfach an die Stromversorgung im Elektronikgehäuse angeschlossen werden.

Wenn vorgesehen ist, dass das Gehäuse und das Elektronikgehäuse über einen gemeinsamen Gehäuseboden einteilig miteinander verbunden sind, und dass die Durchführung durch den Gehäuseboden geführt ist, dann lassen sich das Elektronikgehäuse und das Gehäuse zum einen einteilig miteinander fertigen. Zum anderen wird durch den gemeinsamen Gehäuseboden auch die erforderliche Leitungslänge der Anschlussleitungen reduziert und somit die Leitungsverluste verringert.

Besonders bevorzugt sind das Gehäuse und/oder das Elektronikgehäuse topfförmig ausgebildet. Dies ermöglicht es die einzelnen Komponenten einfach in den von diesen Gehäusen zur Verfügung gestellten Installationsräumen zu montieren. Vorzugsweise sind das Gehäuse und das Elektronikgehäuse dabei so gestaltet, dass sie von gegenüberliegenden Seiten her zugänglich sind. Beispielsweise können das Gehäuse und das Elektronikgehäuse in Achsrichtung der Antriebswelle gesehen von gegenüberliegenden Seiten zugänglich sein.

Um eine effektive Kühlung der im Elektronikgehäuse gehaltenen Stromversorgung zu ermöglichen, kann es gemäß der Erfindung auch vorgesehen sein, dass der Kühlkanal zumindest bereichsweise im Bereich des Gehäusebodens verläuft.

Vorzugsweise ist der Kühlkanal dabei zumindest bereichsweise zwischen der Stromversorgung und dem Stator angeordnet.

Für den Anschluss der Anschlussleitungen an die Stromversorgung sind im Rahmen der Erfindung verschiedene Lösungen denkbar. So kann es beispielsweise vorgesehen sein, dass die Anschlussleitung bzw. die Anschlussleitungen im Bereich ihres Leitungsendes mit einer Leiterplatte der Stromversorgung verlötet oder verschweißt ist/sind. Die Anschlussleitungen können bei der Montage durch die Durchführung hindurch gesteckt und mit der Leiterplatte verlötet werden. Anschließend kann die Vergussmasse eingebracht werden und dabei das Dichtstück gebildet werden. Durch die direkte Verlötung der Enden der Anschlussleitungen mit der Leiterplatte wird die Anzahl der Kontakte und der Verbindungsstellen zwischen der elektrischen Maschine und der Stromversorgung auf ein Minimum reduziert.

Alternativ kann es auch vorgesehen sein, dass die Anschlussleitung im Bereich ihres Leitungsendes ein Steckerelement trägt, das auf einen Gegenstecker der Stromversorgung aufgesteckt ist. Dabei ist es vorzugsweise so, dass der Öffnungsquerschnitt der Durchführung so dimensioniert ist, dass das Steckerelement durch die Durchführung hindurchgeführt werden kann. Entsprechend kann die Anschlussleitung mit dem Steckerelement vorkonfektioniert werden. Das Steckerelement lässt sich dann durch die Durchführung hindurch stecken. Anschließend wird die Vergussmasse zur Bildung des Dichtstücks eingebracht. Abschließend kann das Steckerelement auf einen Gegenstecker der Stromversorgung aufgesteckt werden.

Weiterhin ist es auch denkbar, dass die Anschlussleitungen im Bereich ihrer Leitungsenden an einen Stecker angeschlossen sind, der mit wenigstens einem Halteelement in dem Dichtstück gehalten, vorzugsweise darin formschlüssig verankert ist. Entsprechend lässt sich der Stecker in der Vergussmasse befestigen, wobei vorzugsweise keine weiteren Befestigungsmittel mehr erforderlich sind. Um die Auszugssicherheit des Steckers aus der Vergussmasse zu erhöhen, kann eine Formschlussverbindung zwischen dem Dichtstück und dem Stecker mittels entsprechend geformter Halteelemente vorgesehen sein.

Die Erfindung wird im Folgenden anhand von in den Zeichnungen dargestellten Ausführungsbeispielen näher erläutert. Es zeigen:
Figur 1 in Seitenansicht und im Schnitt einen elektromotorisch betriebenen Verdichter,
Figur 2 einen Teilschnitt längs des in Figur 1 mit II-II markierten Schnittverlaufs,
Figur 3 eine Detaildarstellung einer zweiten Erfindungsvariante,
Figur 4 eine Detaildarstellung einer dritten Erfindungsvariante,
Figur 5 ein in Figur 1 mit V markiertes Detail,
Figur 6 eine Detaildarstellung einer weiteren erfindungsgemäßen Variante in einem in Figur 1 mit VI markiertem Bereich und
Figur 7 eine alternative Erfindungsvariante eines elektrisch betreibbaren Verdichters.

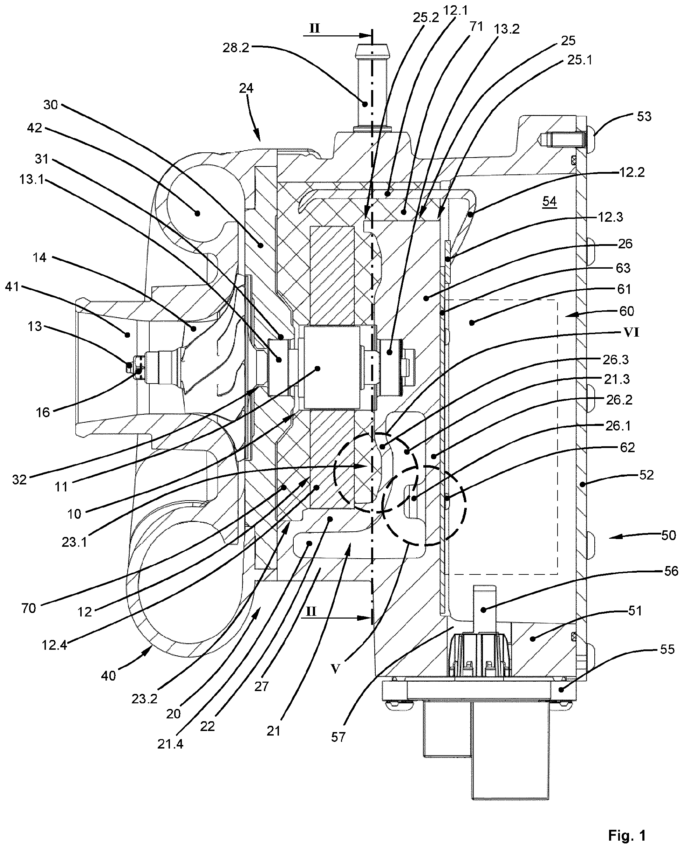

Figur 1 zeigt einen erfindungsgemäßen elektromotorisch betriebenen Verdichter. Als Verdichter sollen im Rahmen der Erfindung insbesondere Turbolader verstanden werden. Dabei kann es sich auch um einen Abgas-Turbolader handeln. Bei Abgasturboladern sind mit einer Antriebswelle 13 ein Verdichterrad 14 und zusätzlich eine Turbine gekoppelt. Die Turbine wird dabei im Abgasstrom insbesondere eines Verbrennungsmotors betrieben. Erfindungsgemäße Verdichter können auch zur Versorgung von Brennstoffzellen mit einem Gasstrom Verwendung finden.

Wie Figur 1 zeigt, weist der Verdichter eine Antriebswelle 13 auf. Diese Antriebswelle 13 ist mittels Lagern 13.1, 13.2 in einem Gehäuse 20 drehbar gelagert. Eines oder beide Lager 13.1, 13.2 können von Wälzkörperlagern, beispielsweise Kugellagern, gebildet sein. Im Rahmen der Erfindung ist es weiterhin denkbar, dass eines oder beide Lager 13.1, 13.2 als hydrodynamische Gleitlager ausgebildet sind.

Das Gehäuse 20 weist einen Gehäuseboden 26 auf. Eines der beiden Lager 13.1, 13.2 ist vorzugsweise in dem Gehäuseboden 26 montiert.

Die Antriebswelle 13 trägt einen Rotor 11 einer elektrischen Maschine 10. nämlich eines Elektromotors. Der Rotor 11 ist dabei drehfest mit der Antriebswelle 13 verbunden. Der Rotor 11 ist mit Permanentmagneten bestückt, die über den Umfang des Rotors 11 verteilt bzw. diesen umgebend angeordnet sind.

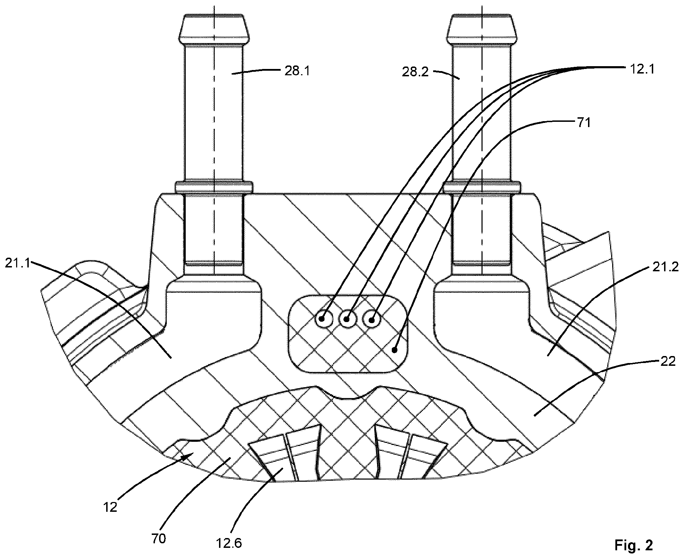

Der Elektromotor 10 weist weiterhin einen Stator 12 auf. Dieser Stator 12 weist vorzugsweise einen Statorkern 12.4, beispielsweise ein Blechpaket auf, welches aus Blechlamellen zusammengesetzt ist. Vorzugsweise ist das Blechpaket als stanzpaketiertes Blechpaket ausgebildet. Der Stator besitzt Statorwicklungen 12.6 (siehe Figur 2). Diese Statorwicklungen werden jeweils von einem Draht gebildet. Jede dieser Statorwicklungen besitzt eine Anschlussleitung 12.1. Die Anschlussleitung 12.1 ist dabei abhängig von der Stromstärke und Frequenz von einem Draht, einem Kabel oder einer Stromschiene gebildet. Das zweite Ende der Anschlussleitung 12.1 ist über einen Masseanschluss an das Gehäuse 20 angeschlossen.

Die Antriebswelle 13 trägt endseitig ein Strömungsrad 14 in Form eines Verdichterrads. Das Strömungsrad 14 ist mittels eines Befestigungselements 16 drehfest mit der Antriebswelle 13 verbunden.

Wie Figur 1 zeigt, ist das Strömungsrad 14 in einem Verdichtergehäuse 40 untergebracht. Das Verdichtergehäuse 40 weist einen Ansaugbereich 41 auf. Über diesen Ansaugbereich 41 kann ein Gas, im vorliegenden Ausführungsbeispiel Luft, angesaugt werden. Das Gas wird mit dem Strömungsrad 14 komprimiert und in einen spiralförmig im Verdichtergehäuse 40 verlaufenden Verdichterkanal 42 geführt. Der Verdichterkanal 42 weist einen Auslass auf. Über diesen Auslass kann das komprimierte Gas abgeführt und einer Arbeitsmaschine, beispielsweise einem Verbrennungsmotor oder einer Brennstoffzelle, zugeführt werden.

Das Gehäuse 20 ist topfförmig ausgebildet und weist eine umlaufende Seitenwand 27 auf, die von dem Gehäuseboden 26 aufsteigt.

In das Gehäuse 20 ist ein Hohlraum eingebracht, der einen Kühlkanal 21 bildet. Dabei ist der Kühlkanal 21 als Kavität ausgebildet, der allseitig von dem Material, welches das Gehäuse 20 bildet, umgeben ist. Insbesondere ist der Kühlkanal 21 einteilig in das Gehäuse 20 eingeformt.

Vorzugsweise erstreckt sich der Kühlkanal 21 zumindest bereichsweise im Bereich des Gehäusebodens 26 und/oder der Wandung 27. Der Kühlkanal 21 kann dabei so ausgebildet sein, dass er im Wesentlichen ringförmig den Aufnahmebereich des Gehäuses 20 umgibt.

Gemäß der Erfindung kann es so sein, dass der Kanal 21 einen ersten Kühlkanal-Bereich 21.3 aufweist, der zwischen dem Stator 12 und dem Aufnahmeraum 54 des Elektronikgehäuses 50 angeordnet ist. Die Projektionen des Stators 12 und des ersten Kühlkanal-Bereichs 21.3 in Achsrichtung der Antriebswelle 13 in eine gemeinsame Ebene überlappen sich zumindest bereichsweise, wie dies Figur 1 zeigt.

Vorzugsweise ist es weiterhin so, dass sich die Projektion des Aufnahmeraums 54, insbesondere des Bereichs des Aufnahmeraums 54 in dem die Stromversorgung 60 untergebracht ist, und die Projektion des ersten Kühlkanal-Bereichs 21.3 in Achsrichtung der Antriebswelle 13 in eine gemeinsame Ebene sich zumindest bereichsweise überlappen. In dem gezeigten Ausführungsbeispiel umfasst die Stromversorgung 60 beispielsweise eine Leiterplatte 63 und darauf montierte Elektronikbauteile 61. Insbesondere überlappen sich die Projektion der Leiterplatte 63 und die Projektion des ersten Kühlkanal-Bereichs 21.3 in Achsrichtung der Antriebswelle 13 in eine gemeinsame Ebene sich zumindest bereichsweise.

Wie Figur 1 weiter zeigt, ist ein zweiter Kanalbereich 21.4 des Kühlkanals 21 vorgesehen, der den Stator 12 zumindest bereichsweise in Umfangsrichtung des Stators 12 umgibt.

Der erste Kühlkanal-Bereich 21.3 geht unmittelbar in den zweiten Kühlkanal-Bereich 21.4 über. Es kann jedoch auch vorgesehen sein, dass der erste Kühlkanal-Bereich 21.3 und der zweite Kühlkanal-Bereich 21.4 zumindest bereichsweise voneinander getrennt im Gehäuse 20 geführt sind.

Wie Figur 2 erkennen lässt, weist der Kühlkanal 21 einen Vorlauf 21.1 und einen Rücklauf 21.2 auf. Im Bereich zwischen Vorlauf 21.1 und Rücklauf 21.2 ist die ringförmige Kontur des Kühlkanals 21 unterbrochen. Der Vorlauf 21.1 ist über eine Zulaufleitung 28.1 und der Rücklauf 21.2 über eine Ablaufleitung 28.2 an eine Kühlmittelversorgung anschließbar. Dementsprechend bilden die Zulaufleitung 28.1 und die Ablaufleitung 28.2 Anschlussstücke für die Kühlmittelversorgung. Das Kühlmittel kann über die Zulaufleitung 28.1 in den Vorlauf 21.1 strömen und durch den Kühlkanal 21 fließen. Das Kühlmittel verlässt den Kühlkanal 21 durch den Rücklauf 21.2 und die Ablaufleitung 28.2.

Wie die Figuren 1 und 2 erkennen lassen, bildet die Seitenwand 27 eine Innenwand 22, die den Aufnahmeraum des Gehäuses 20 umgibt. Die Innenwand 22 grenzt unmittelbar an den Kühlkanal 21 an.

Der Stator 12 ist in dem Aufnahmeraum des Gehäuses 20 positioniert. Zur Befestigung des Stators 12 in dem Aufnahmeraum wird eine Vergussmasse 70 verwendet. Diese Vergussmasse 70 füllt den Aufnahmeraum des Gehäuses 20 zumindest bereichsweise aus. Dabei kann es so sein, dass die Vergussmasse 70 zwei Aufnahmebereiche 23.1, 23.2 bildet. Der erste Aufnahmebereich 23.1 ist dabei zwischen dem Gehäuseboden 26 und dem Stator 12 angeordnet. Der zweite Aufnahmebereich 23.2 ist im Bereich zwischen dem Strömungsrad 14 und dem Stator 12 gebildet.

An seinem Außenumfang stützt sich der Stator 12 mit seinem Statorkern gegenüber der Seitenwand 27 ab. Zusätzlich sind ein Anschlag und eine Zentrierung an der Seitenwand 27 ausgebildet. An diesem Anschlag bzw. der Zentrierung ist der Stator 12 in Achsrichtung der Antriebswelle 13 abgestützt. Somit kann der Stator 12 durch eine Gehäuseöffnung 24 des Gehäuses 20 in den Aufnahmebereich des Gehäuses 20 eingesetzt werden. Die Einsetzbewegung wird durch den Anschlag bzw. die Zentrierung in axialer bzw. radialer Richtung begrenzt, sodass der Stator 12 exakt im Gehäuse 20 ausgerichtet ist.

Zur Fixierung des Stators 12 ist die Vergussmasse 70 verwendet. Die Vergussmasse 70 bildet zudem ein Dichtstück 71 aus, welches eine Durchführung 25 im Gehäuseboden 26 ausfüllt. Das Dichtstück 71 ist einteilig mit zumindest einem der Aufnahmebereiche 23.1, 23.2 ausgebildet. Für die Fertigung kann entsprechend eine flüssige Vergussmasse 70 in den Aufnahmeraum des Gehäuses 20 eingefüllt werden, sodass die entsprechenden Aufnahmebereiche 23.1, 23.2 und die Durchführung 25 gefüllt werden. Anschließend wird die Vergussmasse 70 zur Aushärtung gebracht, sodass sich ein fester Vergussmasse-Körper ergibt.

Wie Figur 1 weiter erkennen lässt, sind die Anschlussleitungen 12.1 der Statorwicklungen durch die Durchführung 25 hindurchgeführt und in das Dichtstück 71 eingebettet. Das Dichtstück 71 bildet mithin eine Dichtung, über die die Anschlussleitungen 12.1 abgedichtet aus dem Gehäuse 20 herausgeführt sind. Durch die adhäsive Verbindung zwischen dem Dichtstück 71 und den Anschlussleitungen 12.1 kann nicht nur eine Dichtung, sondern auch eine Zugentlastung für die Anschlussleitungen 12.1 erreicht werden.

Figur 1 zeigt, dass die Durchführung 25 als Durchbruch im Gehäuseboden 26 ausgebildet sein kann. Die Durchführung 25 weist zwei Öffnungen 25.1, 25.2 auf, zwischen denen sich das Dichtstück 71 erstreckt. Dabei kann es so sein, dass das Dichtstück 71 den Bereich zwischen den Öffnungen 25.1, 25.2 vollständig oder teilweise ausfüllt.

Wie Figur 1 weiter zeigt, kann das Gehäuse 20 im Bereich seiner Gehäuseöffnung mit einem Deckel 30 verschlossen werden. Für die abgedichtete Zuordnung des Deckels 30 zu dem Gehäuse 20 eine Dichtelementaufnahme vorgesehen sein, die eine Dichtung aufnimmt. Mit nicht gezeigten Befestigungselementen wird der Deckel 30 mit dem Gehäuse 20 verbunden. Der Deckel 30 ist mit einem Durchbruch 32 versehen, durch den die Antriebswelle 13 hindurchgeführt ist.

Der Verdichter weist weiterhin ein Elektronikgehäuse 50 auf. Das Elektronikgehäuse 50 wird von einer umlaufenden Seitenwand 51 begrenzt. Vorzugsweise schließt sich diese Seitenwand 51 einteilig an den Gehäuseboden 26 an. Das Elektronikgehäuse 50 kann ebenfalls topfförmig ausgebildet sein. Es weist eine Öffnung auf, die von der umlaufenden Seitenwand 51 begrenzt ist. Dabei ist die Öffnung des Elektronikgehäuses 50 gegenüberliegend der Gehäuseöffnung 24 des Gehäuses 20 angeordnet. Die Öffnung des Elektronikgehäuses 50 kann mit einer Abdeckung 52 verschlossen werden. Hierzu kann die Seitenwand 51 mit Gewindeaufnahmen versehen seien. Fluchtend zu den Gewindeaufnahmen weist die Abdeckung 52 Schraubaufnahmen auf. Durch diese sind Befestigungsschrauben 53 hindurchgeführt und in die Gewindeaufnahmen eingeschraubt. Vorzugsweise ist die Abdeckung 52 gegenüber der Seitenwand 51 abgedichtet.

Das Elektronikgehäuse 50 umgibt einen Aufnahmebereich 54. In diesem Aufnahmebereich 54 ist eine Leiterplatte 63 angeordnet. Die Leiterplatte 63 kontaktiert vorzugsweise den Gehäuseboden 26 und kann mit diesem über Befestigungsmittel 62 verbunden werden. Auf diese Weise wird ein wärmeleitender Kontakt zwischen dem Gehäuseboden 26 und der Leiterplatte 63 geschaffen. Verlustwärme, die an der Leiterplatte 63 ansteht, kann dann über den Gehäuseboden 26 in den Kühlkanal 21 abgetauscht werden.

Vorzugsweise ist es dabei auch denkbar, dass zwischen der Leiterplatte 63 und dem Gehäuseboden 26 eine thermisch leitfähige Paste zur Reduktion des thermischen Widerstands angeordnet ist. Damit wird die Kühlleistung weiter verbessert.

Denkbar ist es auch, dass zwischen der Leiterplatte 63 und dem Gehäuseboden 26 ein Wärmeverteil-Element, beispielsweise ein plattenförmiges Element aus einem gut wärmeleitfähigen Material, beispielsweise Kupfer oder Aluminium, oder eine Dampfkammer (sog. Vapour Chamber) vorgesehen ist. Denkbar ist hier der Einsatz eines sogenannten Heatspreaders, wie er aus der Halbleitertechnik prinzipiell bekannt ist. Dieses Wärmeverteil-Element kann auch zusätzlich beidseitig auf seinen der Leiterplatte 63 und dem Gehäuseboden 26 zugewandten Seiten mit einer wärmeleitfähigen Paste versehen werden, um einen verbesserten Kontakt zu diesen Komponenten herzustellen.

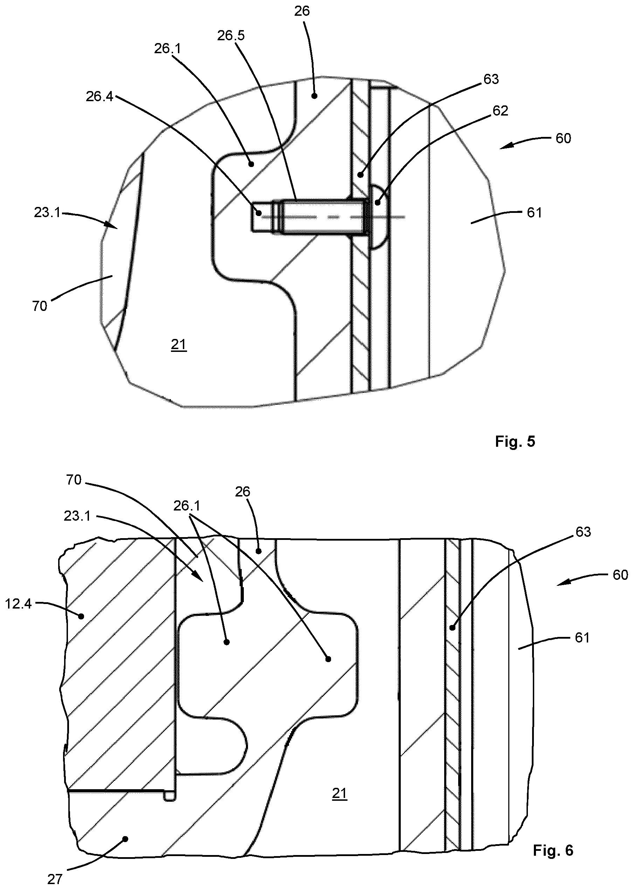

Wie Figur 1 zeigt, kann es auch vorgesehen sein, dass der Gehäuseboden 26 einen oder mehrere Vorsprünge 26.1 aufweist, die in den Kühlkanal 21 hineinragen. Die Vorsprünge 26.1 stehen vorzugsweise von einem Wandabschnitt 26.2 des Gehäusebodens 26 ab, der sich an den Aufnahmeraum 54 des Elektronikgehäuses 50, insbesondere an den Bereich, in dem die Leiterplatte 63 gehalten ist, anschließt. Hierdurch wird die wirksame Fläche zum Tausch der Verlustwärme vergrößert. Besonders bevorzugt kann es dabei vorgesehen sein, wie Figur 5 zeigt, dass der Vorsprung 26.1 eine Befestigungsaufnahme 26.4, beispielsweise in Form einer Schraubaufnahme, aufweist. In das Gewinde dieser Schraubaufnahme ist das als Befestigungsschraube ausgebildete Befestigungsmittel 62 eingeschraubt. Hierdurch kann der Übergangsbereich des Gehäusebodens 26 zwischen dem Aufnahmeraum 54 und dem Kühlkanal 21, zum Zweck einer verbesserten Wärmeübertragung, dünnwandig ausgebildet werden.

Figur 1 zeigt weiterhin, dass der Kühlkanal 21 im Gehäuse 20 so ausgebildet ist, dass im Übergangsbereich zwischen dem Aufnahmeraum des Gehäuses 20 und dem Kühlkanal 21 ein Wandbereich 26.3 gebildet ist. Auch der Wandbereich 26.3 ist dünnwandig ausgebildet, um einen guten Wärmeübergang zum Stator 12 hin zu ermöglichen.

Vorzugsweise beträgt die Wandstärke des Wandabschnitts 26.2 und/oder des Wandbereichs 26.3 im Bereich zwischen 2,5 Millimeter und 4 Millimeter, wobei das Material des Gehäusebodens 26 vorzugsweise aus einem nicht magnetisierbaren Werkstoff, z.B. Aluminium bzw. einer Aluminiumlegierung, Titan bzw. einer Titanlegierung oder Magnesium bzw. einer Magnesiumlegierung besteht. Weiterhin bilden die Vorsprünge 26.1, die in den Kühlkanal 21 hineinragen, Elemente, welche die Strömung im Kühlkanal 21, beeinflussen. Die Vorsprünge 26.1 bilden somit Turbulatoren, die für eine bessere Durchmischung des Kühlmediums (beispielsweise Kühlwasser) im Kühlkanal 21 sorgen. Damit die Vorsprünge 26.1 zur Verwirklichung dieser Aufgabe dem Kühlmittel keinen zu großen Strömungswiderstand entgegensetzen, können sie einen zylindrischen Außenumfang aufweisen. Alternativ ist es ebenso vorstellbar, dass die Vorsprünge 26.1 entlang der Strömungsrichtung des Kühlmittels einen strömungsoptimierten, länglichen, z.B. elliptischen, Querschnitt aufweisen.

Zusätzlich oder alternativ zu den von dem Wandabschnitt 26.2 des Gehäusebodens 26 abstehenden Vorsprüngen 26.1 kann es vorgesehen sein, dass die Vorsprüngen 26.1 von dem Wandbereich 26.3 abstehen. In einer besonders vorteilhaften Ausführung kann es vorgesehen sein, dass, wie in Figur 6 gezeigt, die von dem Wandabschnitt 26.2 abstehenden Vorsprünge 26.1 sowohl in den Kühlkanal 21 als auch in den Aufnahmeraum des Gehäuses 20 ragen. Auf diese Weise kann eine verbesserte Wärmeabfuhr vom Stator 12 in das Kühlmittel erfolgen. Besonders bevorzugt kontaktiert dabei zumindest einer der von dem Wandabschnitt 26.2 abstehenden Vorsprünge 26.1 den Stator 12, insbesondere den Statorkern 12.4. Die den Aufnahmeraum des Gehäuses 20 ragenden Vorsprünge 26.1 können axiale Anschläge für den Statorkern 12.4 bilden. In der in Figur 6 gezeigten Erfindungsvariante kontaktieren die von dem Wandabschnitt 26.2 in den Aufnahmeraum des Gehäuses 20 ragenden Vorsprünge 26.1 die Statorkern 12.4 im Bereich der Statorzähne.

Die Seitenwand 51 des Elektronikgehäuses 50 kann mit einem Durchbruch 57 versehen sein. Durch diesen Durchbruch 57 hindurch lässt sich eine Stromleitung 56, z.B. mittels eines Steckkontaktes, hindurchführen. Mittels der Stromleitung 56 werden auf der Leiterplatte 63 angeordnete Elektronikbauteile 61 der Stromversorgung 60 kontaktiert und an eine externe Spannungsversorgung angeschlossen. Die Stromversorgung 60 ist im vorliegenden Ausführungsbeispiel mit einem Inverter ausgestattet. Mit dem Inverter kann der von der Stromleitung 56 zugeführte Gleichstrom in eine Wechselspannung transformiert werden, die den Statorwicklungen 12.6 über die Anschlussleitungen 12.1 zugeleitet wird. Zur Zugentlastung der Stromleitung 56 und zur verbesserten Montage des Verdichters ist ein Anschlussstück 55 beispielsweise in Form einer Steckdose verwendet. Dieses kann seitlich mit dem Elektronikgehäuse 50 verschraubt werden.

Die Leiterplatte 63 lässt sich zusammen mit den Elektronikbauteilen 61 durch die offene Seite des Elektronikgehäuses 50 in den Aufnahmebereich 54 einsetzen.

Wie Figur 1 zeigt, weisen die Anschlussleitungen 12.1 Leitungsenden 12.2 auf. Diese sind über eine Verbindung 12.3 mit der Leiterplatte 63 elektrisch kontaktiert.

Die Verbindung 12.3 kann im einfachsten Fall von einer elektrisch leitenden stoffschlüssigen Verbindung, vorzugsweise einer Lotverbindung, gebildet werden. Denkbar ist es auch hier eine Crimpverbindung vorzusehen.

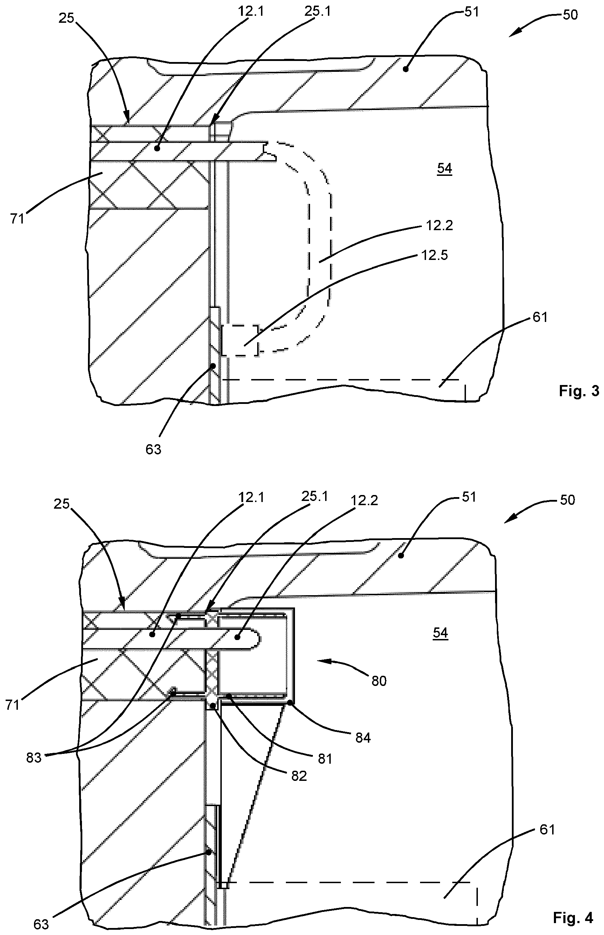

Wie Figur 3 zeigt, kann es auch vorgesehen sein, dass die Anschlussleitungen 12.1 mit ihren Leitungsenden 12.2 zu einem Steckerelement 12.5 geführt und mit diesem verbunden sind. Das Steckerelement 12.5 kann dann auf einen Gegenstecker der Leiterplatte 63 aufgesteckt werden.

Figur 4 zeigt eine weitere Ausgestaltungsvariante. Wie diese Zeichnung zeigt, enden die Leitungsenden 12.2 der Anschlussleitungen 12.1 im Bereich hinter dem Dichtstück 71 und stehen über die Öffnung 25.1 der Durchführung 25 vor. In die das Dichtstück 71 bildende Vergussmasse 70 ist ein Stecker 80 eingebettet und mittels der Vergussmasse 70 unverlierbar darin gehalten. Der Stecker 80 besitzt eine Buchse 81, innerhalb der die Leitungsenden 12.2 enden. Dabei sind die Anschlussleitungen 12.1 durch einen Flansch 82 des Steckers 80 hindurchgeführt. Der Flansch 82 trägt Halteelemente 83. Die Halteelemente 83 sind in die Vergussmasse 70 des Dichtstücks 71 eingesetzt und hierin verankert. Vorzugsweise werden die Halteelemente 83 in der Vergussmasse 70 formschlüssig gehalten. Sie weisen zu diesem Zweck dann Ansätze auf, die quer zur Längserstreckung der Anschlussleitungen 12.1 von den Haltelementen 83 vorstehen.

Die Buchse 81 bildet einen Stecker zur Aufnahme einer Steckaufnahme 84. Die Steckaufnahme 84 ist auf der Leiterplatte 63 befestigt. Die Steckaufnahme 84 kann mit der Buchse verbunden, z.B. zusammengesteckt werden, so dass die Leitungsenden 12.2 und die Leiterplatte 63 elektrisch miteinander verbunden werden. An den Gegenstecker ist ein Kabel angeschlossen, welches zu der Leiterplatte 63 führt und dort angeschlossen ist.

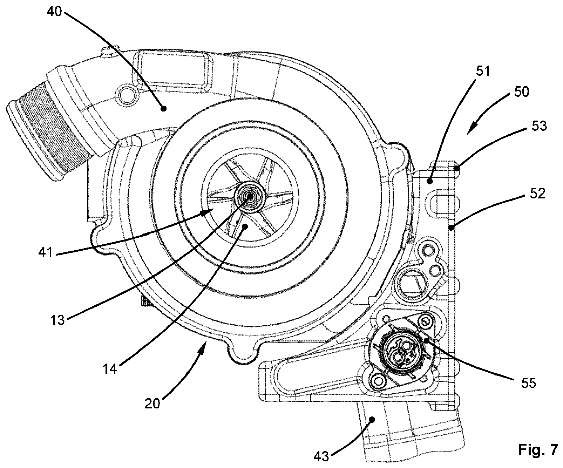

Figur 7 zeigt einen weiteren erfindungsgemäßen elektromotorisch betriebenen Verdichter in Form eines Abgas-Turboladers. Das Elektronikgehäuse 50 ist radial außen den dem Gehäuse 20 angeordnet. Das Elektronikgehäuse 50 umfasst das Gehäuse 20 teilweise in Umfangsrichtung. In einer solchen Erfindungsvariante erstrecken sich die Anschlussleitungen 12.1 in einer Richtung senkrecht zur Achsrichtung, um in das radial außen an dem Gehäuse 20 angeordnete Elektronikgehäuse 50 geführt zu werden. Die Anschlussleitungen 12.1 können durch eine einzige Durchführung 25 aus dem Gehäuse 20 heraus in das Elektronikgehäuse 50 geführt werden oder jede Anschlussleitung 12.1 kann durch eine separate Durchführung 25 aus dem Gehäuse 20 heraus in das Elektronikgehäuse 50 geführt werden. In der in Figur 7 dargestellten Erfindungsvariante ist das Elektronikgehäuse 50 an dem Gehäuse 20 angeschraubt.

Wie die vorstehenden Ausführungen veranschaulichen, betrifft die Erfindung einen Verdichter mit einer Antriebswelle , die mit einem Elektromotor gekoppelt ist und die ein Strömungsrad mittelbar oder unmittelbar antreibt, wobei der Elektromotor einen Stator aufweist, der in einem Gehäuse aufgenommen und darin befestigt ist, wobei der Stator über Anschlussleitungen an eine außerhalb des Gehäuses angeordnete Stromversorgung angeschlossen oder anschließbar ist, wobei die Stromversorgung außerhalb des Gehäuses in einem Aufnahmebereich eines Elektronikgehäuse untergebracht ist, und wobei ein Kühlkanal vorgesehen ist, der eine Zulaufleitung und eine Ablaufleitung aufweist und der dazu hergerichtet ist ein Kühlfluid, insbesondere eine Kühlflüssigkeit, zu führen. Um dabei eine kompakte Bauweise verwirklichen zu können, ist es erfindungsgemäß vorgesehen, dass das Gehäuse und das Elektronikgehäuse einteilig miteinander verbunden sind, und dass der Kühlkanal einen ersten Kühlkanalbereich aufweist, der zumindest bereichsweise zwischen dem Stator und dem Elektronikgehäuse angeordnet ist und der als Hohlraum in dem Gehäuse eingeformt ist. Durch diese Zuordnung des Kühlkanals 21 zu dem Stator 12 und dem Elektronikgehäuse 50 wird zudem auch eine besonders gute Kühlwirkung erzielt.

## Patentansprüche

1. Strömungsmaschine, insbesondere Verdichter oder Turbine, mit einer Antriebswelle (13), die mit einer elektrischen Maschine (10), insbesondere einem Elektromotor oder einem Generator, gekoppelt ist und die ein Strömungsrad, insbesondere ein Verdichterrad (14) oder ein Turbinenrad, mittelbar oder unmittelbar antreibt, wobei die elektrische Maschine einen Stator (12) mit Statorwicklungen aufweist und der Stator (12) in einem Gehäuse (20) aufgenommen ist, wobei die Statorwicklungen über Anschlussleitungen (12.1) an eine außerhalb des Gehäuses (20) angeordnete Stromversorgung (60) angeschlossen oder anschließbar sind, wobei wenigstens eine der Anschlussleitungen (12.1) durch eine Durchführung (25) des Gehäuses (20) aus dem Gehäuse (20) herausgeführt ist,
**dadurch gekennzeichnet**
**dass** in dem Gehäuse (20) eine Vergussmasse (70) eingebracht ist, und dass die Vergussmasse (70) ein Dichtstück (71) bildet, welches eine elektrische Leitung gegenüber der Durchführung (25) abdichtet.

2. Strömungsmaschine nach Anspruch 1, **dadurch gekennzeichnet, dass** die elektrische Leitung die Anschlussleitung (12.1) ist, und dass, zumindest eine, vorzugsweise jede der Anschlussleitungen (12.1) pro Phase, jeweils einstückig ausgebildet ist/sind und durch die Durchführung (25) hindurch aus dem Gehäuse (20) herausgeführt ist/sind und/oder
dass die elektrische Leitung eine Sensorleitung ist und durch die Durchführung (25) hindurch aus dem Gehäuse (20) herausgeführt ist.

3. Strömungsmaschine nach einem der Ansprüche 1 oder 2, **dadurch gekennzeichnet, dass** die Durchführung (25) sich zwischen einer dem Stator (12) zugewandten Öffnung (25.2) und einer dem Stator (12) abgewandten Öffnung (25.1) erstreckt, und dass der sich zwischen den Öffnungen (25.1, 25.2) erstreckende Bereich der Durchführung (25) zumindest teilweise, vorzugsweise vollständig, mit dem Dichtstück (71) der Vergussmasse (70) ausgefüllt ist.

4. Strömungsmaschine nach einem der Ansprüche 1 bis 3, **dadurch gekennzeichnet, dass** der Stator (12) in dem Gehäuse (20) zumindest teilweise in die Vergussmasse (70) eingebettet ist, und dass der den Stator (12) zumindest teilweise aufnehmende Bereich der Vergussmasse (70) und das Dichtstück (71) miteinander einstückig ausgebildet sind.

5. Strömungsmaschine nach einem der Ansprüche 1 bis 4, **dadurch gekennzeichnet, dass** das Gehäuse (20) einen Kühlkanal (21) aufweist der den Stator (12) zumindest bereichsweise umgibt und der über eine Zulaufleitung (28.1) und eine Ablaufleitung (28.1) an eine Kühlmittelversorgung anschließbar ist, und dass die Vergussmasse (70), insbesondere das Dichtungsstück (71) mit dem den Kühlkanal (21) aufnehmenden Bereich in wärmeleitenden Kontakt steht oder
dass das Dichtungsstück (71) zumindest bereichsweise von dem Kühlkanal (21) umgeben ist.

6. Strömungsmaschine nach Anspruch 5, **dadurch gekennzeichnet, dass** die Vergussmasse (70), insbesondere das Dichtstück (71) eine Wärmeleitfähigkeit im Bereich zwischen 0,5 W/(m^{∗}K) und 5 W/(m^{∗}K) aufweist.

7. Strömungsmaschine nach einem der Ansprüche 5 oder 6, **dadurch gekennzeichnet, dass** im Anschluss an die Zulaufleitung (28.1) ein Vorlauf (21.1) des Kühlkanals (21) und vor der Ablaufleitung (28.2) ein Rücklauf (21.2) des Kühlkanals (21) im Gehäuse (20) ausgebildet ist und dass die Durchführung (25) zwischen dem Vorlauf (21.1) und dem Rücklauf (12.2) im Gehäuse (20) angeordnet ist, wobei sich vorzugsweise die Anschlussleitungen (12.2) in Achsrichtung der Antriebswelle (13) erstrecken.

8. Strömungsmaschine nach einem der Ansprüche 1 bis 7, **dadurch gekennzeichnet, dass** die Anschlussleitung (12.1) durch die Durchführung (25) hindurch in ein Elektronikgehäuse (50) geführt und in dem Elektronikgehäuse (50) an die Stromversorgung (61) angeschlossen ist, die vorzugsweise einen Inverter aufweist.

9. Strömungsmaschine nach Anspruch 8, **dadurch gekennzeichnet, dass** das Elektronikgehäuse eine Seitenwand aufweist, die gegenüberliegend dem Gehäuse (20) eine Öffnung bildet, wobei die Öffnung von einer vorzugsweise abnehmbaren Abdeckung (52) verschlossen ist, wobei die Seitenwand (51) einen seitlichen Durchbruch (57) zur Aufnahme einer Stromzuleitung (56) aufweist.

10. Strömungsmaschine nach einem der vorhergehenden Ansprüche, **dadurch gekennzeichnet, dass** das Gehäuse (20) und das Elektronikgehäuse (50) über einen gemeinsamen Gehäuseboden (26) einteilig miteinander verbunden sind, und dass die Durchführung (25) durch den Gehäuseboden (26) geführt ist.

11. Strömungsmaschine nach einem der Ansprüche 1 bis 10, **dadurch gekennzeichnet, dass** sich die Durchführung (25) in einem Bereich des in Achsrichtung der Antriebswelle projizierten Stators (12) befindet, wobei sich vorzugsweise die mindestens eine Anschlussleitung (12.2) in Achsrichtung der Antriebswelle (13) erstreckt.

12. Strömungsmaschine nach einem der Ansprüche 1 bis 10, **dadurch gekennzeichnet, dass** sich die Durchführung (25) in einem Bereich radial außerhalb des Stators (12) befindet, wobei sich vorzugsweise die mindestens eine Anschlussleitung (12.2) senkrecht zur Achsrichtung der Antriebswelle (13) erstreckt.

13. Strömungsmaschine nach einem der Ansprüche 10 bis 12, **dadurch gekennzeichnet, dass** der Kühlkanal (21) zumindest bereichsweise im Bereich des Gehäusebodens (26) verläuft.

14. Strömungsmaschine nach einem der Ansprüche 1 bis 13, **dadurch gekennzeichnet, dass** die Anschlussleitung (12.1) im Bereich ihres Leitungsendes mit einer Leiterplatte (63) der Stromversorgung (60) stoffschlüssig verbunden oder daran mittels einer Crimpverbindung oder Schraubverbindung befestigt ist,
oder dass die Anschlussleitung (12.1) im Bereich ihres Leitungsendes ein Steckerelement (12.5) trägt, das auf einen Gegenstecker der Stromversorgung (60) aufgesteckt ist,
oder dass die Anschlussleitungen (12.1) im Bereich ihrer Leitungsenden an einen Stecker (80) angeschlossen sind, das mit wenigstens einem Halteelement (83) in dem Dichtstück (71) gehalten, vorzugsweise darin formschlüssig verankert ist.
